# EUROPEAN PATENT SPECIFICATION

(11) **EP 3 614 252 B1**
(45) Date of publication and mention of the grant of the patent: **11.11.2026**
(21) Application number: 19200917.3
(22) Date of filing: 10.02.2012
(51) Int. Cl.: G06F 3/04883, G06F 1/16, G06F 3/04845, G06F 3/0485, G06F 3/0486, G06F 3/04886, G06F 3/04847, G06F 3/14, G09G 5/14

(54) **INFORMATION DISPLAY APPARATUS HAVING AT LEAST TWO TOUCH SCREENS AND INFORMATION DISPLAY METHOD THEREOF**
INFORMATIONSANZEIGEVORRICHTUNG MIT MINDESTENS ZWEI BERÜHRUNGSBILDSCHIRMEN UND INFORMATIONSANZEIGEVERFAHREN DAFÜR
APPAREIL D'AFFICHAGE D'INFORMATIONS DOTÉ D'AU MOINS DEUX ÉCRANS TACTILES ET SON PROCÉDÉ D'AFFICHAGE D'INFORMATIONS

(30) Priority: 10.02.2011 US 201161441491 P; 20.06.2011 KR 20110059500
(43) Date of publication of application: 26.02.2020
(62) Document number(s) of the earlier application(s) in accordance with Art. 76 EPC: 12744371.1 / 2 673 701
(73) Proprietor: Samsung Electronics Co., Ltd., Gyeonggi-do 16677 (KR)
(72) Inventor: SEO, Joon-Kyu, 16677 Suwon-si, (KR); KANG, Kyung-A, 16677 Suwon-si, (KR); KWAK, Ji-Yeon, 16677 Suwon-si, (KR); KIM, Hyun-Jin, 16677 Suwon-si, (KR)
(74) Representative: HGF

(56) References cited:
- EP-A1- 2 241 963
- EP-A2- 2 163 972

## Description

### Technical Field

The present invention relates generally to an information display apparatus having at least two touch screens and an information display method thereof, and more particularly, to an information display apparatus for displaying information corresponding to a user's gesture on at least one of two touch screens and an information display method thereof.

### Background Art

Conventionally, a user controls information displayed on a touch screen in an information display apparatus having a single touch screen, using only one finger, for example, an index finger. Now, information display apparatuses having two touch screens have started to emerge in order to display more information and increase device portability.

EP 2 241 963 A1 discloses an information processing apparatus includes a first touch panel, a second touch panel, and a controller. The first touch panel displays a first object and detects a first touch operation of a user on the first object. The second touch panel displays a second object and detects a second touch operation of the user on the second object. The controller links and changes the displayed first object and the displayed second object when the second touch operation is detected within a predetermined time period since the first touch operation has been detected.

EP 2 163 972 A2 discloses a mobile terminal. The mobile terminal includes a display module comprising a front surface and a rear surface, a display controller for displaying an object associated with a first menu on at least one of the front surface or rear surface, a user input unit configured to receive a touch input via the front and rear surface of the display module for selecting one of the displayed objects, and a controller configured to execute an operation associated with the selected object according to which of the front and rear surface is touched.

### Disclosure of Invention

### Technical Problem

However, it is inconvenient for a user to rapidly process information on touch screens using one finger in an information display apparatus with two touch screens. Accordingly, there exists a need for rapidly processing information according to a user's gestures made with different fingers on the left and right touch screen, respectively (such as, for example, a left thumb or index finger on a left touch screen and with a right thumb or index finger on a right touch screen).

### Solution to Problem

An aspect of embodiments of the present invention is to address at least the problems and/or disadvantages and to provide at least the advantages described below. Accordingly, an aspect of embodiments of the present invention is to provide an information display apparatus having at least two touch screens, for rapidly displaying and processing information on the at least two touch screens, and an information display method thereof.

The invention is defined by the independent claims. Further aspects of the invention are outlined in the dependent claims. When the term "embodiment" is used for describing an unclaimed combination of features, it has to be understood as referring to examples useful for understanding the present invention.

### Brief Description of Drawings

The above and other objects, features and advantages of certain embodiments of the present invention will be more apparent from the following detailed description taken in conjunction with the accompanying drawings, in which:
FIG. 1 is a block diagram of an information display apparatus according to an embodiment of the present invention;
FIG. 2A is a diagram illustrating the information display apparatus according to the embodiment of the present invention;
FIGs. 2B and 2C are diagrams illustrating the display apparatus along with fingers with which a user uses the information display apparatus according to the embodiment of the present invention;
FIG. 3 is a diagram illustrating a user's gestures made on first and second screens according to an embodiment of the present invention;
FIG. 4 is a diagram illustrating a user's gestures made on the first and second screens according to another embodiment of the present invention;
FIGs. 5A and 5B are diagrams illustrating a user's gestures made on the first and second screens according to another embodiment of the present invention;
FIG. 6 is a diagram illustrating a user's gestures made on the first and second screens according to another embodiment of the present invention;
FIG. 7 is a diagram illustrating a user's gestures made on the first and second screens according to another embodiment of the present invention;
FIG. 8 is a diagram illustrating a user's gestures made on the first and second screens according to another embodiment of the present invention;
FIGs. 9A and 9B is a diagram illustrating a user's gestures made on the first and second screens according to another embodiment of the present invention;
FIG. 10 is a diagram illustrating a user's gestures made on the first and second screens according to a further embodiment of the present invention;
FIG. 11 is a flowchart illustrating an operation of the information display apparatus according to an embodiment of the present invention;
FIG. 12 is a block diagram of a processor in the information display apparatus according to an embodiment of the present invention; and
FIG. 13 is a block diagram of a display unit in the processor according to an embodiment of the present invention.

### Mode for Invention

Reference will now be made in detail to the preferred embodiments of the present invention with reference to the accompanying drawings. Like reference numerals denote the same components throughout the specification and the drawings. A detailed description of a generally known function and structure of the present invention will be avoided lest it should obscure the subject matter of the present invention. Throughout the drawings, the same drawing reference numerals may be understood to refer to the same or similar elements, features, and structures.

Herein, a user's gesture refers to a motion that a user makes in order to display or control information on a touch screen. The gestures may be performed using, but are not limited to, the user's left and right fingers, such as, index fingers and/or thumbs. Although the following examples refers to using fingers for various touch gestures for convenience of description, embodiments of the present invention are not limited to user touches initiated by a user's finger, and other ways of providing gestures to the touch screen, such as by a stylus, etc., may be used in accordance with embodiments of the present invention.

Examples herein refer to sensing "simultaneous" touch actions, such as simultaneous sensing of a touch drag and a touch or a first touch drag and a second touch drag. Throughout the application, simultaneous sensing or sensing of simultaneous touch actions includes cases where both touch actions are literally performed simultaneously, cases where one touch action occurs during another touch action, and cases where there is an overlap between the respective time periods of at least two touch actions. Such touch actions and sensing of such touch actions are considered to be simultaneous irrespective of which touch action is initiated first.

A user's gestures may include, for example, a touch, a touch release, a rotation, a pinch, a spread, a touch drag, etc. Among such gestures, a touch drag gesture is performed by touching a finger on a touch screen and then moving the finger to another position in a specific direction on the touch screen in a touched state. The touch drag gesture may include gestures such as a touch and drag, a flick, a swipe, etc. Herein, the term "touched state" refers to a touch on a touch screen or a very near approach onto the touch screen without actually touching the touch screen.

According to embodiments of the present invention, the information display apparatus may be any of a broad range of devices that display an application or content, such as a tablet Personal Computer (PC), a Portable Multimedia Player (PMP), a Personal Digital Assistant (PDA), a smart phone, a portable phone, and a digital photo frame.

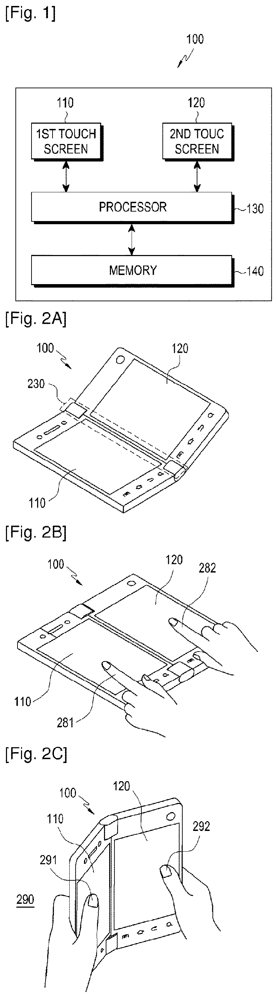

FIG. 1 is a block diagram of an information display apparatus according to an embodiment of the present invention.

Referring to FIG. 1, an information display apparatus 100 may include a first touch screen 110, a second touch screen 120, a processor 130, and a memory 140.

Each of the touch screens 110 and 120 may include a display panel and a touch sensor (not shown). The display panel may be, for example, a Plasma Display Panel (PDP), an Electronic Paper Display (EPD) panel, a Liquid Crystal Display (LCD) panel, a Light emitting Polymer Display (LPD) panel, an Organic Light-Emitting Diode (OLED) panel, or an Active-matrix Organic Light-Emitting Diode (AMOLED) panel. The touch sensor may be provided at one side of the display panel, for sensing a user's gesture. The touch sensor may be implemented into a capacitive, resistive, infrared, or surface acoustic wave touch sensor.

FIG. 2A is a diagram illustrating the information display apparatus according to the embodiment of the present invention.

Referring to FIG. 2A, the first and second screens 110 and 120 may be folded or unfolded up to a predetermined angle with respect to a central axis 230. A hinge for connecting the first touch screen 110 to the second touch screen 120 or a part of a flexible screen may serve as the central axis 230.

FIGs. 2B and 2C are diagrams illustrating the display apparatus along with fingers with which a user uses the information display apparatus according to the embodiment of the present invention.

Referring to FIG. 2B, a user may make gestures on the first and second touch screens 110 and 120 with his or her fingers (e.g., index fingers or thumbs). For instance, if the information display apparatus 100 is put on or set up to rest on a surface such as a desk, the user may make gestures on the first and second touch screens 110 and 120 using the user's left and right index fingers 281 and 282, as illustrated in FIG. 2B. Referring to FIG. 2C, the user may grab the information display apparatus 100 with his or her fingers and make gestures on the first and second touch screens 110 and 120 with his or her thumbs 291 and 292.

Referring to FIG. 1 again, at least one processor 130 and the memory 140 may be disposed under at least one of the touch screens 110 and 120.

The memory 140 may store programs required to implement various embodiments of the present invention, applications, content, and other various data. The memory 140 may include at least one of a volatile memory and a non-volatile memory. For example, the memory 140 may include a non-volatile memory such as a Read Only Memory (ROM), an Electrically Erasable and Programmable ROM (EEPROM), or a flash memory, for storing programs used for implementation of the present invention, and/or a Dynamic Random Access Memory (DRAM) or Static RAM (SRAM) for temporarily storing data to process information during power supply. In addition, at least a part of the memory 140 may be removable from the information display apparatus 100. For example, a Compact Flash (CF) card, a Secure Digital (SD) card, a Smart Media (SM) card, a MultiMedia Card (MMC), or a memory stick may be used as the removable part of the memory 140. The removable part (not shown) of the memory 140 may store various data, which may include downloaded from an external device.

The processor 130 provides overall control to the components of the information display apparatus 100. For example, methods for implementing certain operations according to various embodiments of the present invention may be implemented as programs stored in the memory 140 in conjunction with operations performed by hardware itself. According to the present invention, the processor 130 or hardware of the information display apparatus 100 detects simultaneous occurrence of a first touch drag on the first touch screen 110 and a second touch on the second touch screen 120 and thus may display information corresponding to the first touch drag and the second touch on at least one of the first and second touch screens 110 and 120.

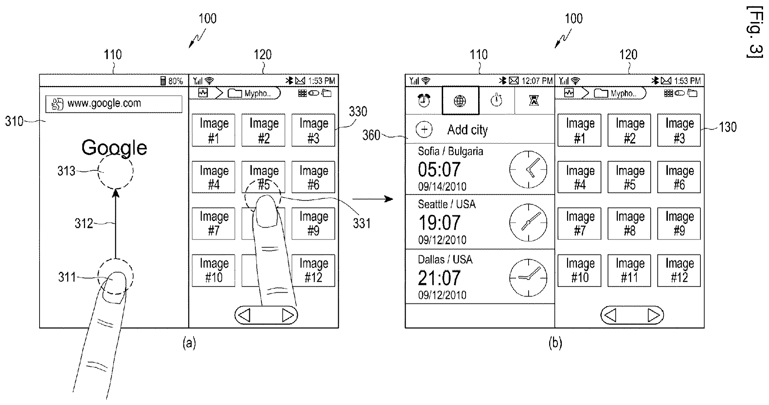

FIG. 3 is a diagram illustrating a user's gestures made on first and second screens according to an embodiment of the present invention.

Referring to the left drawing (a) of FIG. 3, the information display apparatus 100 may display first information 310 on the first touch screen 110 and second information 330 on the second touch screen 120. The user may make a gesture on each of the first and second touch screens 110 and 120 based on the first and second information 310 and 330.

The information display apparatus 100 may sense a touch and upward drag (i.e., a first touch drag 312 on the first screen 110 and a second touch 331 on the second touch screen 120. The first touch drag 312 is performed by making a touch 311 on the first touch screen 110 and then dragging, along the direction indicated by reference numeral 312 to another position 313.

Upon simultaneously sensing the first touch drag 312 and the second touch 331, the information display apparatus 100 may display information corresponding to the first touch drag 312 and the second touch 331 on at least one of the first and second touch screens 110 and 120. Simultaneous sensing of the first touch drag 312 and the second touch 331 means sensing the first touch drag 312 made by a left index finger or thumb and the second touch 331 made by a right index finger or thumb irrespective of their order.

Referring to the right drawing (b) of FIG. 3, the information display apparatus 100 may display information 360 and 330 corresponding to the first touch drag 311, 312, and 313 and the second touch 331 on the first and second touch screens 110 and 120. For example, the information display apparatus 100 may display the information 360 other than the information 310 on the first touch screen 110, in correspondence with the first touch drag 311, 312, and 313, and may keep displaying the information 330 on the second touch screen 120, in correspondence with the second touch 331. For example, the information display apparatus 100 may display an application 360 other than an application 310 on the first touch screen 110, in correspondence with the first touch drag 311, 312, and 313 sensed from the first touch screen 120 and may maintain an application 330 displayed on the second touch screen 110, in correspondence with the second touch 331 sensed from the second touch screen 120.

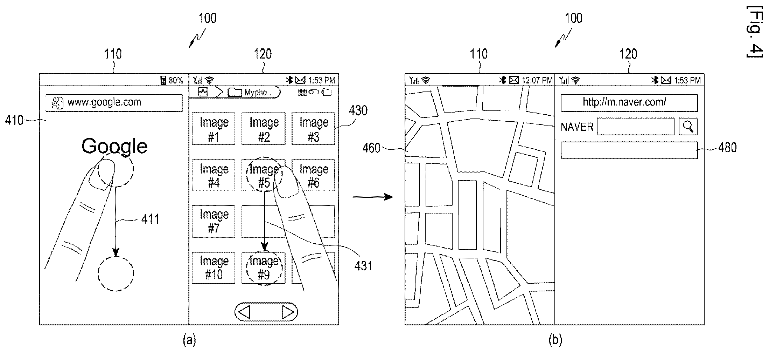

FIG. 4 is a diagram illustrating a user's gestures made on the first and second screens according to another embodiment of the present invention.

Referring to the left drawing (a) of FIG. 4, the information display apparatus 100 may simultaneously sense a downward first touch drag 411 on the first touch screen 110 and a downward second touch drag 431 on the second touch screen 120.

Referring to the right drawing (b) of FIG. 4, the information display apparatus 100 may display information 460 and 480 corresponding to the first touch drag 411 and the second touch drag 431, respectively, on the first and second touch screens 110 and 120. For example, upon sensing the first touch drag 411, the information display apparatus 100 may display an application 460 other than an application 410 on the first touch screen 110. Upon sensing the second touch drag 431, the information display apparatus 100 may display an application 480 other than an application 430 on the second touch screen 120.

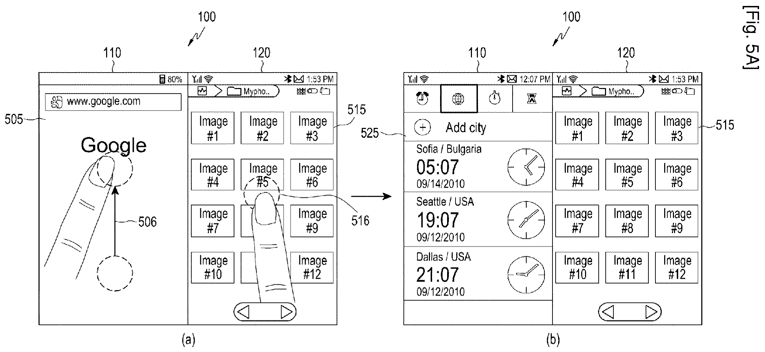

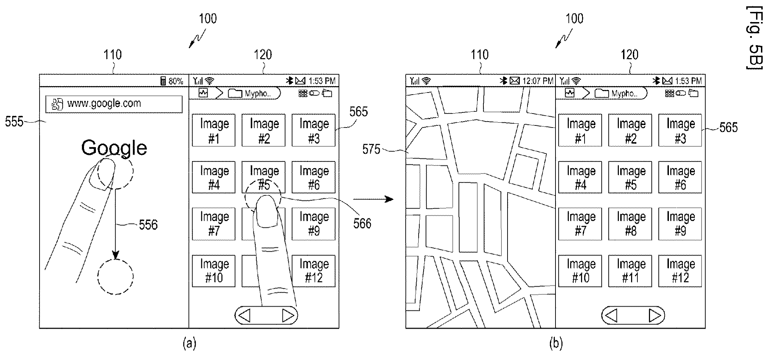

FIGs. 5A and 5B are diagrams illustrating a user's gestures made on the first and second screens according to another embodiment of the present invention.

Referring to the left drawing (a) of FIG. 5A, when the information display apparatus 100 senses an upward first touch drag 506 on the first touch screen 110 simultaneously with a second touch 516 on the second touch screen 120, the apparatus 100 may determine the dragging direction of the first touch drag 506 and thus may display information corresponding to the first drag 506 and the second touch 516 on at least one of the first and second touch screens 110 and 120 according to the dragging direction. For example, the information display apparatus 100 may sense that the touch and drag 506 has been made in a first direction (i.e. upward), as illustrated in the left drawing (a) of FIG. 5A.

The apparatus 100 may also sense that a touch drag 556 has been made in a second direction (i.e. downward), as illustrated in the left drawing (a) of FIG. 5B. If a plurality of pieces of information is arranged in a predetermined order (e.g., a plurality of applications having a predetermined order are being executed as the plurality of pieces of information), the information display apparatus 100 may sequentially display the plurality of pieces of information in the predetermined order according to the first or second direction. For example, referring to the right drawing (b) of FIG. 5A, the information display apparatus 100 may display information 525 earlier in sequence than information 505 on the first touch screen 110 according to the touch drag 506 made in the first direction, and may keep displaying information 515 on the second touch screen 120 according to the second touch 516.

In another example, referring to the right drawing (b) of FIG. 5B, the information display apparatus 100 may display information 575 next to information 555 on the first touch screen 110 according to the touch drag 556 made in the second direction, and may keep displaying information 565 on the second touch screen 120 according to a second touch 566.

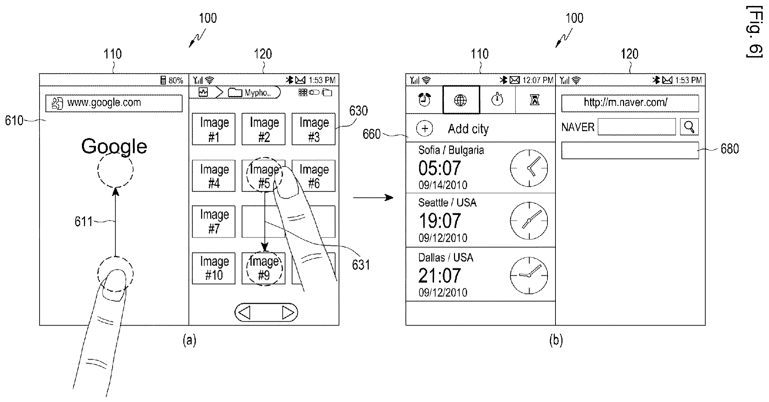

FIG. 6 is a diagram illustrating a user's gestures made on the first and second screens according to another embodiment of the present invention.

Referring to the left drawing (a) of FIG. 6, the information display apparatus 100 may simultaneously sense a first touch drag 611 made in a first direction on the first touch screen 110 and a second touch drag 631 made in a second direction on the second touch screen 120. As a result, the information display apparatus 100 may display first information 660 corresponding to the first touch drag 611 made in the first direction on the first touch screen 110 and second information 680 corresponding to the second touch drag 631 made in the second direction on the second touch screen 120, as illustrated in the right drawing (b) of FIG. 6. Each of the first and second information 660 and 670 may correspond to at least one of a plurality of applications being executed in the information display apparatus 100. For instance, if a plurality of applications are divided into first and second groups, information 610 and 660 displayed on the first touch screen 110 may be applications of the first group, whereas information 630 and 680 displayed on the second touch screen 120 may be applications of the second group.

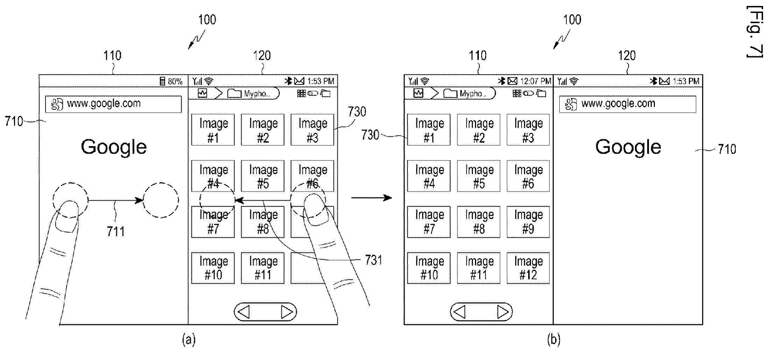

FIG. 7 is a diagram illustrating a user's gestures made on the first and second screens according to another embodiment of the present invention.

Referring to the left drawing (a) of FIG. 7, the information display apparatus 100 may simultaneously sense a first touch drag 711 made in a first direction on the first touch screen 110 and a second touch drag 731 made in a second direction on the second touch screen 120. The direction of the first touch drag 711 may be towards the second touch screen 120 (i.e., to the right), while the direction of the second touch drag 731 may towards the first touch screen 110 (i.e., to the left). Thus, the first and second directions may be mutually approaching directions.

Referring to the right drawing (a) of FIG. 7, the information display apparatus 100 may exchange information 710 displayed on the first touch screen 110 with information 730 displayed on the second touch screen 120 in accordance with the first touch drag 711 and the second touch drag 731. For example, the information display apparatus 100 may exchange the positions of an application 710 displayed on the first touch screen 110 and an application 730 displayed on the second touch screen 120. In other words, the information display apparatus 100 may display the application 730, which was previously displayed on the second touch screen 120, on the first touch screen 110, and may display the application 710, which was previously displayed on the first touch screen 110, on the second touch screen 120.

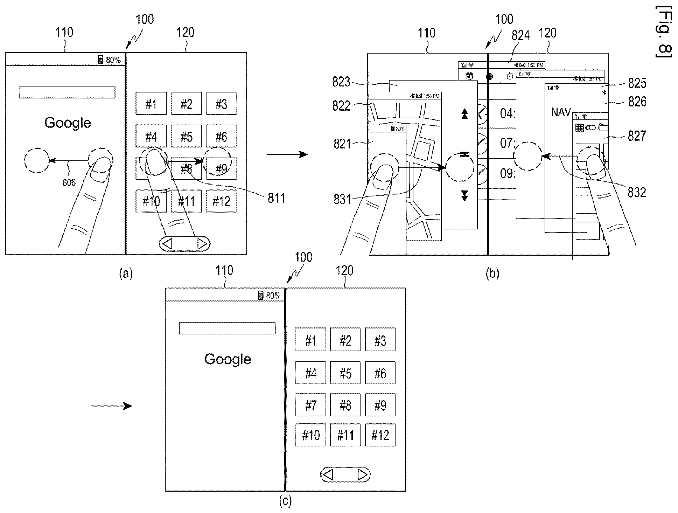

Referring to the upper left drawing (a) of FIG. 8, the information display apparatus 100 may simultaneously sense a first touch drag 806 made in a first direction on the first screen 110 and a second touch drag 811 made in a second direction on the second screen 120. The direction of the first touch drag 806 may be a direction moving away from the second touch screen 120, the direction of the second touch drag 806 may be a direction moving away from the first touch screen 110. Thus, the directions of the first and second touch drags 806 and 811 may mutually move away from each other.

FIG. 8 is a diagram illustrating a user's gestures made on the first and second screens according to another embodiment of the present invention.

Referring to the upper right drawing (b) of FIG. 8, the information display apparatus 100 may display all applications 821 to 827 available by a touch drag, in correspondence with the first touch drag 806 and the second touch drag 811, on at least one of the first and second touch screens 110 and 120.

A user may change the position of at least one of the applications 821 to 827 displayed on the first and second touch screens 110 and 120. For example, when the user touches one of the applications 821 to 827, the selected application may be moved to the forefront position. In addition, if a first application among the applications 821 to 827 is touched and dragged to a second application, the positions of the first and second applications may be exchanged.

Referring to the upper right drawing (b) of FIG. 8, with the plurality of applications 821 to 827 displayed on the first and second touch screens 110 and 120, the information display apparatus 100 may simultaneously sense a first touch drag 821 on the first touch screen 110, made in a direction towards the second touch screen 120 and a second touch drag 832 on the second touch screen 120, made in a direction towards the first touch screen 110. Upon simultaneously sensing the first and second touch drags 821 and 832 the information display apparatus 100 may fullscreen the forefront applications 821 and 827 from among the applications 821 to 827 on the first and second touch screens 110 and 120, respectively, in response to the first touch drag 831 and the second touch drag 832, such as shown in the lower drawing (c) of FIG. 8.

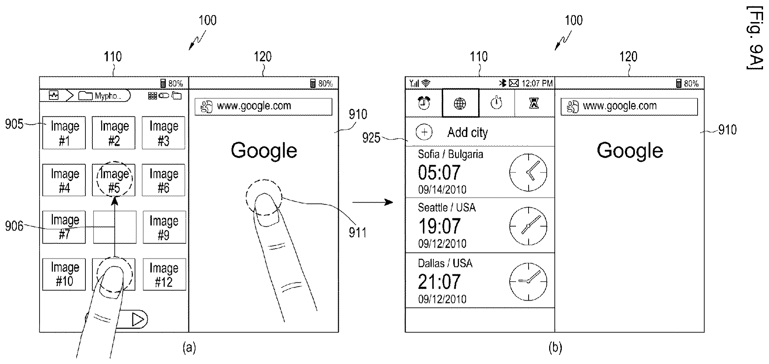

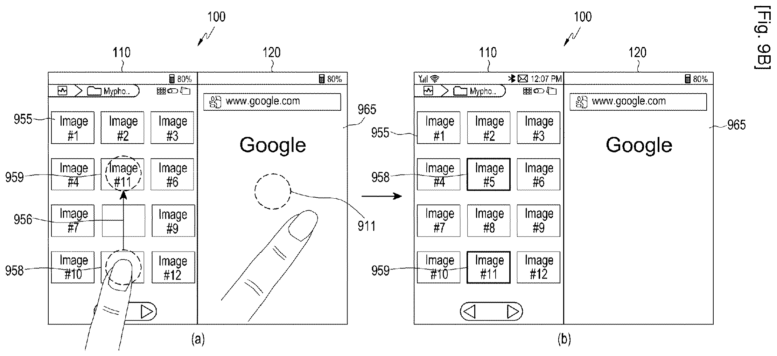

Referring to FIGs. 9A and 9B, the information display apparatus 100 may display information corresponding to a first touch drag 906 on the first touch screen 110 and a second touch 911 on the second touch screen 120, or may only display information corresponding to the first touch drag 906, depending on whether the information display apparatus 100 has simultaneously sensed the first touch drag 906 and the second touch 911.

FIGs. 9A and 9B is a diagram illustrating a user's gestures made on the first and second screens according to another embodiment of the present invention.

Referring to FIG. 9A, upon simultaneously sensing the first touch drag 906 and the second touch 911, the information display apparatus 100 may display, on the first touch screen 110, an application 925 other than an application 905 that displayed before the first touch drag 906 was sensed, according to the first touch drag 906. Meanwhile, the apparatus 100 may keep displaying, on the second touch screen 120, an application 910 that was displayed before the second touch 911 was sensed, according to the second touch 911.

Referring to FIG. 9B, if the information display apparatus 110 does not sense a first touch drag 956 and the second touch 911 at the same time (e.g. the second touch drag 911 and then the first touch drag 956 are sensed), it may change the position of content 958 in an application 955 displayed on the first touch screen 110, in correspondence with the first touch drag 956. For example, the information display apparatus 100 may exchange the position of content corresponding to the start of the first touch drag 956 with the position of content corresponding to the end of the first touch drag 956, in accordance with the first touch drag 956. That is, the information display apparatus 100 may move content 958 or exchange the positions of the content 958 and content 959.

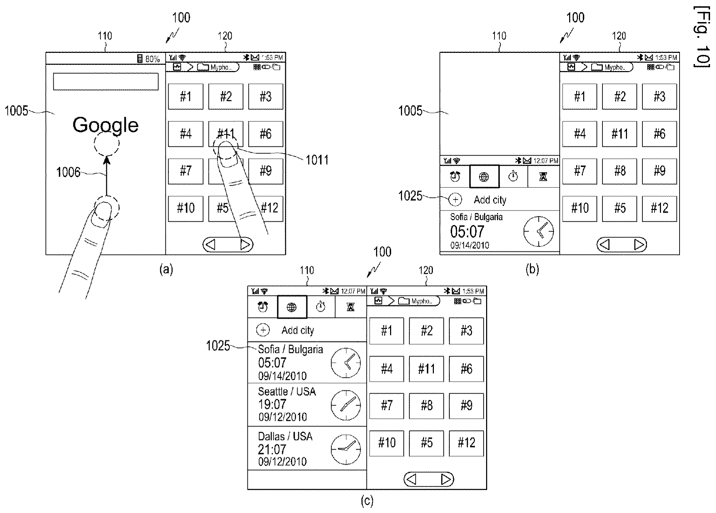

FIG. 10 is a diagram illustrating a user's gestures made on the first and second screens according to a further embodiment of the present invention.

Referring to Fig. 10, upon sensing a first touch drag 1006 on the first touch screen 110 and a second touch 1011 on the second touch screen as shown in upper left drawing (a) of FIG. 10, the information display apparatus 100 may sequentially arrange existing information 1005 that was displayed before the first touch drag 1006 was sensed, and may also display information 1025 displayed after sensing the first touch drag 1006 as shown in the upper right drawing (b) of FIG. 10. For example, the information display apparatus 100 may display both the application 1005 that was already displayed before the first touch drag 1006 was sensed, as well as display the application 1025 after the first touch drag 1006 is sensed, on the first touch screen 110 during the first touch drag 1006 in progress. During the first touch drag 1006, the area over which the application 1005 is displayed on the first touch screen 110 may decrease, whereas the area over which the application 1025 is displayed may increase on the first touch screen 110. Upon completion of the first touch drag 1006, the first touch screen 110 may display only the application 1025 corresponding to the first touch drag 1006, such as illustrated in the lower drawing (c) of FIG. 10.

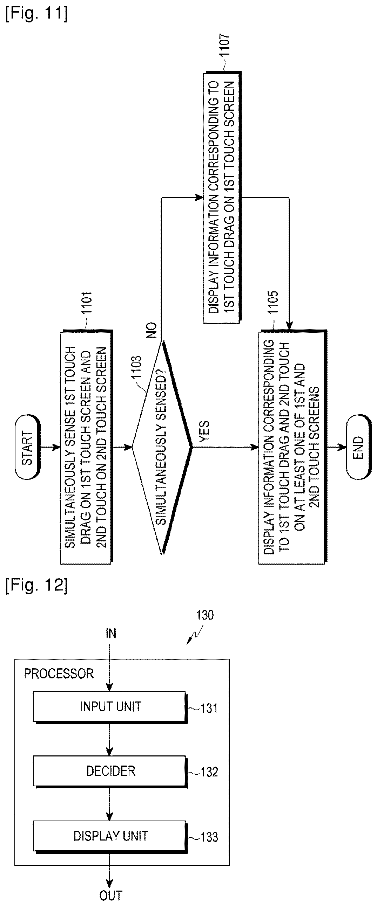

FIG. 11 is a flowchart illustrating an operation of the information display apparatus according to an embodiment of the present invention.

Referring to FIG. 11, the information display apparatus 100 may simultaneously sense a first touch drag on the first touch screen 110 and a second touch on the second touch screen 120 in step 1101. If the information display apparatus 100 has sensed the first touch drag and the second touch, it may determine whether the sensing is simultaneous in step 1103.

Upon a determination that the first touch drag and the second touch are simultaneously sensed, the information display apparatus 100 may display information corresponding to the first touch drag and the second touch on at least one of the first and second touch screens 110 and 120 in step 1105. For example, the information display apparatus 100 may display an application other than an existing application on the first touch screen 110, while maintaining an existing application on the second touch screen, such as illustrated in FIG. 9A.

However, if the first touch drag and the second touch are not sensed simultaneously, the information display apparatus 100 may display information corresponding to the first touch drag on the first touch screen 110 in step 1107. For instance, the information display apparatus 100 may change the position of content in an application displayed on the first touch screen 110, according to the first touch drag.

FIG. 12 is a block diagram of a processor in the information display apparatus according to an embodiment of the present invention.

Referring to FIG. 12, the processor 130 may include an input unit 131, a decider 132, and a display unit 133.

The input unit 131 may receive a sensed signal corresponding to a first touch or a first touch drag sensed from the first touch screen 110, and may also receive a sensed signal corresponding to a second touch or a second touch drag sensed from the second touch screen 120.

The decider 132 may determine whether the first touch drag and the second touch have been sensed simultaneously, using the sensed signals received from the input unit 131.

If the first touch drag and the second touch have been sensed simultaneously, the display unit 133 may control display of information corresponding to the first touch drag and the second touch on at least one of the first and second touch screens 110 and 120. For example, the display unit 133 may control display of an application other than an already-displayed application on the first touch screen 110, while maintaining an already-displayed application on the second touch screen 120.

If a first touch drag and a second touch drag are sensed from the first and second touch screens 110 and 120, respectively through the input unit 131, the display unit 133 may control display of applications other than already-displayed applications on the first and second touch screens 110 and 120, in correspondence with the first touch drag and the second touch drag.

When displaying information corresponding to a first touch drag and a second touch, the display unit 133 may control display of one of a plurality of pieces of information on at least one of the first and second touch screens 110 and 120, according to a predetermined order.

In addition, the display unit 133 may control display of information displayed before sensing the first touch drag, together with and information to be displayed after sensing the first touch drag, during the first touch drag in progress.

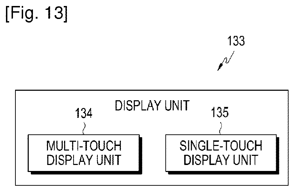

FIG. 13 is a block diagram of a display unit in the processor according to an embodiment of the present invention.

Referring to FIG. 13, the display unit 133 may include a multi-touch display unit 134 and a single-touch display unit 135.

When a first touch drag and a second touch are sensed simultaneously, the multi-touch display 134 may display information corresponding to the first touch drag and the second touch on the first touch screen 110. For example, the multi-touch display 134 may display an application other than an already-display application on the first touch screen 110, while maintaining an already-displayed application on the second touch screen 120.

When the first touch drag and the second touch are not sensed simultaneously, the single-touch display 135 may display information corresponding to the first touch drag on the first touch screen 110. For example, the single-touch display 135 may change the position of content in an application displayed on the first touch screen 110, in correspondence with the first touch drag.

As is apparent from the description of the present invention, a user can process information displayed on at least two touch screens, quickly and simultaneously. For example, the user may display a new application on at least one or each of the two touch screens without using an additional menu. In addition, the user may exchange applications between the two touch screens.

Certain aspects of the information display method in the information display apparatus according to the foregoing embodiments may be implemented as program commands that can be written to a computer-readable recording medium and can thus be read by various computer-aided means. Such a computer-readable recording medium may include program commands, a data file, a data structure, etc. alone or in combination. Program commands written on the computer-readable recording medium may be designed and configured specially for the present invention or known to those skilled in the art of computer software. Such a computer-readable recording medium may be any type of recording device in which data can be stored in a computer-readable manner. Examples of a computer-readable recording medium include a magnetic medium such as a hard disk, a floppy disk, and a magnetic tape, an optical medium such as a Compact Disc (CD)-Read Only Memory (ROM) or a Digital Versatile Disc (DVD), a magneto-optical medium such as a floptical disk, a hardware device configured specially to store and execute program commands such as a ROM, a Random Access Memory (RAM), and a flash memory. Examples of a program command include a high-level language code that can be executed in a computer by means of an interpreter as well as a machine language code such as created by a compiler. The hardware device may be configured to operate as one or more software modules to perform operations of the present invention, and vice versa.

While the present invention has been particularly shown and described with reference to embodiments thereof, it will be understood by those of ordinary skill in the art that various changes in form and details may be made therein without departing from the scope of the present invention as defined by the following claims.

## Claims

1. A method for displaying information on at least two touch screens, the method comprising:
simultaneously receiving a first touch-drag input (806) in a first direction on a first touch screen (110) and receiving a second touch-drag input (811) in a second direction on a second touch screen (120),
wherein the first and second directions are such that the first and second touch-drag inputs mutually move away from each other;
in response to receiving the first touch-drag input and the second touch-drag input, displaying a first plurality of applications (821, 822, 823) on the first touch screen and displaying a second plurality of applications (825, 826, 827) on the second touch screen;
receiving an input for selecting an application from among the first plurality of applications displayed on the first touch screen or among the second plurality of applications displayed on the second touch screen and moving the selected application to a forefront position on the respective one of the first touch screen and the second touch screen;
simultaneously receiving a third touch-drag input (831) on the first touch screen in a direction towards the second touch screen and receiving a fourth touch-drag input (832) on the second touch screen in a direction towards the first touch screen; and
in response to receiving the third touch-drag input and the fourth touch-drag input, displaying the selected application in a full screen mode on the first touch screen or the second touch screen.

2. The method of claim 1, wherein the first direction and the second direction are opposite to each other.

3. An apparatus (100) for displaying information on at least two touch screens, the apparatus comprising:
a first touch screen (110);
a second touch screen (120); and
a processor (130) configured to:
simultaneously receive a first touch-drag input in a first direction on the first touch screen and receive a second touch-drag input in a second direction on the second touch screen, wherein the first and second directions are such that the first and second touch-drag inputs mutually move away from each other;
in response to receiving the first touch-drag input and the second touch-drag input, display a first plurality of applications on the first touch screen and display a second plurality of applications on the second touch screen;
receive an input for selecting an application from among the first plurality of applications displayed on the first touch screen or among the second plurality of applications displayed on the second touch screen and move the selected application to a forefront position on the respective one of the first touch screen and the second touch screen;
simultaneously receive a third touch-drag input on the first touch screen in a direction towards the second touch screen and receive a fourth touch-drag input on the second touch screen in a direction towards the first touch screen; and
in response to receiving the third touch-drag input and the fourth touch-drag input, display of the selected application in a full screen mode on the first touch screen or the second touch screen.

4. The apparatus of claim 3, wherein the first direction and the second direction are opposite to each other.

## Patentansprüche

1. Verfahren zum Anzeigen von Informationen auf mindestens zwei Berührungsbildschirmen, wobei das Verfahren Folgendes umfasst:
gleichzeitiges Empfangen einer ersten Touch-Drag-Eingabe (806) in einer ersten Richtung auf einem ersten Berührungsbildschirm (110) und Empfangen einer zweiten Touch-Drag-Eingabe (811) in einer zweiten Richtung auf einem zweiten Berührungsbildschirm (120), wobei die erste und die zweite Richtung derart sind, dass sich die erste und die zweite Touch-Drag-Eingabe gegenseitig voneinander weg bewegen;
als Reaktion auf das Empfangen der ersten Touch-Drag-Eingabe und der zweiten Touch-Drag-Eingabe Anzeigen einer ersten Vielzahl von Anwendungen (821, 822, 823) auf dem ersten Berührungsbildschirm und Anzeigen einer zweiten Vielzahl von Anwendungen (825, 826, 827) auf dem zweiten Berührungsbildschirm;
Empfangen einer Eingabe zum Auswählen einer Anwendung aus der ersten Vielzahl von Anwendungen, die auf dem ersten Berührungsbildschirm angezeigt wird, oder aus der zweiten Vielzahl von Anwendungen, die auf dem zweiten Berührungsbildschirm angezeigt wird, und Bewegen der ausgewählten Anwendung zu einer vorderen Position auf dem jeweiligen des ersten Berührungsbildschirms und des zweiten Berührungsbildschirms;
gleichzeitiges Empfangen einer dritten Touch-Drag-Eingabe (831) auf dem ersten Berührungsbildschirm in einer Richtung zu dem zweiten Berührungsbildschirm hin und Empfangen einer vierten Touch-Drag-Eingabe (832) auf dem zweiten Berührungsbildschirm in einer Richtung zu dem ersten Berührungsbildschirm hin; und
als Reaktion auf das Empfangen der dritten Touch-Drag-Eingabe und der vierten Touch-Drag-Eingabe Anzeigen der ausgewählten Anwendung in einem Vollbildmodus auf dem ersten Berührungsbildschirm oder dem zweiten Berührungsbildschirm.

2. Verfahren nach Anspruch 1, wobei die erste Richtung und die zweite Richtung einander entgegengesetzt sind.

3. Vorrichtung (100) zum Anzeigen von Informationen auf mindestens zwei Berührungsbildschirmen, wobei die Vorrichtung Folgendes umfasst:
einen ersten Berührungsbildschirm (110);
einen zweiten Berührungsbildschirm (120); und
einen Prozessor (130), der zu Folgendem konfiguriert ist:
gleichzeitiges Empfangen einer ersten Touch-Drag-Eingabe in einer ersten Richtung auf dem ersten Berührungsbildschirm und Empfangen einer zweiten Touch-Drag-Eingabe in einer zweiten Richtung auf dem zweiten Berührungsbildschirm, wobei die erste und die zweite Richtung derart sind, dass sich die erste und die zweite Touch-Drag-Eingabe gegenseitig voneinander weg bewegen;
als Reaktion auf das Empfangen der ersten Touch-Drag-Eingabe und der zweiten Touch-Drag-Eingabe Anzeigen einer ersten Vielzahl von Anwendungen auf dem ersten Berührungsbildschirm und Anzeigen einer zweiten Vielzahl von Anwendungen auf dem zweiten Berührungsbildschirm;
Empfangen einer Eingabe zum Auswählen einer Anwendung aus der ersten Vielzahl von Anwendungen, die auf dem ersten Berührungsbildschirm angezeigt wird, oder aus der zweiten Vielzahl von Anwendungen, die auf dem zweiten Berührungsbildschirm angezeigt wird, und Bewegen der ausgewählten Anwendung zu einer vorderen Position auf dem jeweiligen des ersten Berührungsbildschirms und des zweiten Berührungsbildschirms;
gleichzeitiges Empfangen einer dritten Touch-Drag-Eingabe auf dem ersten Berührungsbildschirm in einer Richtung zu dem zweiten Berührungsbildschirm hin und Empfangen einer vierten Touch-Drag-Eingabe auf dem zweiten Berührungsbildschirm in einer Richtung zu dem ersten Berührungsbildschirm hin; und
als Reaktion auf das Empfangen der dritten Touch-Drag-Eingabe und der vierten Touch-Drag-Eingabe Anzeigen der ausgewählten Anwendung in einem Vollbildmodus auf dem ersten Berührungsbildschirm oder dem zweiten Berührungsbildschirm.

4. Vorrichtung nach Anspruch 3, wobei die erste Richtung und die zweite Richtung einander entgegengesetzt sind.

## Revendications

1. Procédé permettant l'affichage d'informations sur au moins deux écrans tactiles, le procédé comprenant :
la réception simultanée d'une première entrée de toucher-glisser (806) dans une première direction sur un premier écran tactile (110) et la réception d'une deuxième entrée de toucher-glisser (811) dans une seconde direction sur un second écran tactile (120),
lesdites première et seconde directions étant de sorte que lesdites première et deuxième entrées de toucher-glisser s'éloignent mutuellement l'une de l'autre ;
en réponse à la réception de la première entrée de toucher-glisser et de la deuxième entrée de toucher-glisser, l'affichage d'une première pluralité d'applications (821, 822, 823) sur le premier écran tactile et l'affichage d'une seconde pluralité d'applications (825, 826, 827) sur le second écran tactile ;
la réception d'une entrée pour sélectionner une application parmi la première pluralité d'applications affichées sur le premier écran tactile ou parmi la seconde pluralité d'applications affichées sur le second écran tactile et le déplacement de l'application sélectionnée vers une position avant sur l'un respectif du premier écran tactile et du second écran tactile ;
la réception simultanée d'une troisième entrée de toucher-glisser (831) sur le premier écran tactile dans une direction vers le second écran tactile et la réception d'une quatrième entrée de toucher-glisser (832) sur le second écran tactile dans une direction vers le premier écran tactile ; et
en réponse à la réception de la troisième entrée de toucher-glisser et de la quatrième entrée de toucher-glisser, l'affichage de l'application sélectionnée en mode plein écran sur le premier écran tactile ou le second écran tactile.

2. Procédé de la revendication 1, ladite première direction et ladite seconde direction étant opposées l'une à l'autre.

3. Appareil (100) destiné à l'affichage d'informations sur au moins deux écrans tactiles, l'appareil comprenant :
un premier écran tactile (110) ;
un second écran tactile (120) ; et
un processeur (130) configuré pour :
recevoir simultanément une première entrée de toucher-glisser dans une première direction sur le premier écran tactile et recevoir une deuxième entrée de toucher-glisser dans une seconde direction sur le second écran tactile, lesdites première et seconde directions étant de sorte que lesdites première et deuxième entrées de toucher-glisser s'éloignent mutuellement l'une de l'autre ;
en réponse à la réception de la première entrée de toucher-glisser et de la deuxième entrée de toucher-glisser,
afficher une première pluralité d'applications sur le premier écran tactile et afficher une seconde pluralité d'applications sur le second écran tactile ;
recevoir une entrée pour sélectionner une application parmi la première pluralité d'applications affichées sur le premier écran tactile ou parmi la seconde pluralité d'applications affichées sur le second écran tactile et déplacer l'application sélectionnée vers une position avant sur l'un respectif du premier écran tactile et du second écran tactile ;
recevoir simultanément une troisième entrée de toucher-glisser sur le premier écran tactile dans une direction vers le second écran tactile et la réception d'une quatrième entrée de toucher-glisser sur le second écran tactile dans une direction vers le premier écran tactile ; et
en réponse à la réception de la troisième entrée de toucher-glisser et de la quatrième entrée de toucher-glisser, afficher l'application sélectionnée en mode plein écran sur le premier écran tactile ou le second écran tactile.

4. Appareil de la revendication 3, ladite première direction et ladite seconde direction étant opposées l'une à l'autre.
